(19) Europäisches Patentamt / European Patent Office / Office européen des brevets

(11) **EP 2 584 378 B1**

(12) **FASCICULE DE BREVET EUROPEEN**

(45) Date de publication et mention
de la délivrance du brevet:
**06.01.2016 Bulletin 2016/01**

(51) Int Cl.:
**G01S 19/40** (2010.01)     **G01S 19/14** (2010.01)
**G01S 19/11** (2010.01)     **G07B 15/06** (2011.01)

(21) Numéro de dépôt: **12189176.6**

(22) Date de dépôt: **19.10.2012**

(54) **Procédé et système de détection de fraude d'informations de position d'un dispositif mobile**

Verfahren und System zur Erkennung von Betrug bei der Übertragung von Positionsinformationen einer tragbaren Vorrichtung

Method and system for detecting fraudulent positioning information from a mobile device

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.10.2011 FR 1103228**

(43) Date de publication de la demande:
**24.04.2013 Bulletin 2013/17**

(73) Titulaire: **Thales**
**92200 Neuilly Sur Seine (FR)**

(72) Inventeur: **Bardout, Yves**
**31400 TOULOUSE (FR)**

(74) Mandataire: **Dudouit, Isabelle et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**EP-A1- 2 203 022       WO-A1-2009/037133**
**WO-A2-2009/090515     US-A1- 2010 117 899**

## Description

L'objet de la présente invention concerne un procédé et un système pour authentifier la position GNSS d'un élément ou dispositif mobile. Elle vise à détecter le leurrage ou l'usurpation d'émetteur (terme plus connu sous l'acronyme anglo-saxon "spoofing"), et s'applique, par exemple, au domaine des systèmes de télépéage routeur, autoroutier, urbain et à tout autre système de surveillance ou de paiement géo localisé.

Un élément mobile correspond, par exemple, à une personne, un animal, un véhicule ou encore un objet quelconque.

Les terminaux électroniques mobiles mettant en oeuvre des applications requérant des informations sur leur positionnement géographique comportent des moyens pour estimer le plus précisément leur position. Pour cela, des systèmes de géo-localisation par satellites sont communément utilisés, ces systèmes étant désignés par l'acronyme GNSS venant de l'expression anglo-saxonne « Global Navigation Satellite Systems ». Un exemple de système GNSS est le système GPS acronyme anglo-saxon de Global Positioning System.

L'intégrité des positions est un besoin fort dans une application du positionnement critique d'un point de vue légal (système de paiement à l'usage : par exemple assurance, parking et réseau routier), ou une application judiciaire (bracelet électronique ou filatures) tout comme dans une application critique du point de vue sécurité des biens (suivi de containers), sécurité de l'utilisateur (assistance à la conduite).

Les équipements utilisés dans des systèmes mettant en oeuvre ce type d'applications sont habituellement inviolables et mettent en oeuvre des moyens de communication sécurisés. Toutefois, le lien radio avec les satellites est un signal ouvert et vulnérable, à moins d'utiliser les signaux de GNSS cryptés qui ne sont pas accessibles à ces marchés, du fait de la diffusion et de la gestion des clés d'accès.

Il est par conséquent possible qu'un utilisateur non coopératif ou une personne malintentionnée induisent de fausses positions dans un récepteur, sans avoir à s'immiscer dans l'équipement embarqué (désigné OBU ou en anglo-saxon « On Board Unit »), ceci avec un équipement à bas coût de type récepteur régénérateur, et facile à mettre en oeuvre subrepticement. Des stratégies plus ou moins complexes peuvent être implémentées dans un récepteur-régénérateur pour injecter un signal GNSS correspondant à la trajectoire voulue pour contourner l'application : par exemple pour éviter la génération d'une alerte dans un équipement de surveillance, comme le bracelet électronique ou les évènements de tarification déclenchés par le passage de portes virtuelles, dans les applications de paiement à l'usage, ceci tout en minimisant le risque de découverte. Les systèmes envisagés pour ces applications ne permettent pas à ce jour de déjouer de telles fraudes.

La solution typique de tarification est basée sur le passage de portique virtuel ou en anglo-saxon « virtual gate », ou encore le positionnement dans une zone payante (un parking, un centre ville). La vérification du fonctionnement des équipements de véhicule est faite statistiquement sur des points de contrôle fixes ou mobiles, où la cohérence des évènements de tarification est contrôlée a posteriori avec les immatriculations des véhicules observés. Un équipement de fraude peut de plus être conçu pour être silencieux lors de ces contrôles, la position de ces contrôles est publiée vers ces équipements de fraude par un service centralisé (information officielle pour les points fixes ou partagée par les utilisateurs, pour les points mobiles).

La demande de brevet EP 2 203 022 utilise une première information de position donnée par un système GNSS et une deuxième information de position de la cellule dans laquelle se trouve la station de base à laquelle est connecté un dispositif mobile, et vérifie que la position du dispositif mobile est incluse dans la cellule de base correspondant à l'information de position de cellule reçue.

La demande de brevet WO 2009/090515 décrit un système et un procédé pour sécuriser le péage automatique. Dans ce cas, le procédé utilise encore deux sources différentes pour obtenir la position d'un véhicule ; i.e ; le système de tracking de position et les capteurs qui sont indépendants des signaux de navigation.

Différentes méthodes de contrôle de la cohérence des estimations de position sont connues de l'art antérieur. Cette cohérence peut être vérifiée, par exemple, en surveillant la puissance absolue ou relative des signaux GNSS ou par comparaison avec des sources secondaires comme des capteurs de mouvement, ou la mesure d'autres signaux radios. Des procédés originaux mettant en oeuvre la modélisation de l'utilisateur et son environnement sont divulgués dans la demande de brevet WO2012/130891.

La cohérence des mesures peut également être vérifiée en utilisant des techniques de tatouage numérique permettant notamment aux terminaux de localiser les émetteurs d'un réseau. Cette technique est souvent désignée par le mot anglais « watermarking ». Un exemple de mise en oeuvre du tatouage numérique est divulgué dans la demande de brevet WO 2009/037133.

Par ailleurs, la sécurisation des applications de localisation suppose des mesures connues de protection anti-trifouillage (connu par le vocable anglo-saxon "anti-tampering"), sur la sécurisation des échanges, sur la protection des données provenant d'autres capteurs dans le véhicule.

De telles méthodes ne sont pas aujourd'hui implémentées dans les récepteurs commerciaux disponibles, et supposent pour certaines un coût important résultant d'un travail de reconception au niveau de la puce et/ou du logiciel pilote. En particulier reconcevoir la puce ou chip pour récepteurs grand public représente un coût et un délai important. D'autres méthodes supposent l'ajout de capteurs dans l'équipement mobile (inertiels, mesure de signaux radio-fréquences). De toute façon, elles ne sont pas garanties et des attaques sophistiquées peuvent les contourner au moins partiellement.

L'idée mise en oeuvre par la présente invention, au contraire des approches existantes de l'art antérieur qui demandent en général l'ajout d'informations de position secondaires, ou un traitement du signal plus élaboré dans la réception GNSS, consiste notamment à utiliser des informations de type cartographiques, sans faire appel à d'autre capteurs, dans le cas d'un fonctionnement normal du dispositif.

L'objet de l'invention concerne un procédé pour authentifier la position X(t) d'un élément mobile, un élément mobile comprenant au moins un récepteur GNSS, r, ayant une fonction d'estimer la position X(t) de cet élément mobile, ce procédé étant **caractérisé en ce qu'il** comporte en combinaison au moins les étapes suivantes :

- déterminer une ou plusieurs données associées à la position X(t) d'un récepteur GNSS, r,
- extraire d'une base de données cartographique des données de référence associées à la position X(t),
- déterminer au moins un indicateur de cohérence Ic(X) de l'authenticité de la position de l'élément mobile qui établit une cohérence entre des observables GNSS, en utilisant la première donnée associée à la position X(t) dudit récepteur r et la donnée de référence issue de la base cartographique et à la position X(t),
- filtrer le ou lesdits indicateurs Ic(X), en intégrant ces valeurs sur une trajectoire de l'élément mobile pour un intervalle de temps donné, $[t_0, t_1]$,
- authentifier la position X(t) dudit élément mobile en utilisant un ou plusieurs desdits indicateurs de cohérence Ic(X) et en comparant la ou lesdites valeurs des indicateurs à une valeur donnée.

L'établissement de la base cartographique et le calcul d'indicateur de cohérence sont réalisées dans un dispositif centralisé lié par un réseau de communication auxdits éléments mobiles.

L'établissement de la base cartographique et le calcul d'indicateur de cohérence sont, par exemple, réalisées au sein desdits éléments mobiles.

Selon une variante de réalisation, pour authentifier la position X(t) d'un élément mobile, l'indicateur de cohérence Ic(X) est calculé à partir de la position de pseudolithes indiquée dans la base cartographique.

Pour authentifier la position X(t) d'un élément mobile, l'indicateur de cohérence Ic(X) peut être calculé à partir de la ou les directions $\theta_{map1}$, $\theta_{map2}$ du segment routier parcouru et/ou la vitesse $V_{map}$ estimée sur ce segment, à partir de données indiquées dans la base cartographique.

Selon un autre mode de réalisation, pour authentifier la position X(t) d'un élément mobile, l'indicateur de cohérence Ic(X) est calculé à partir d'une part de la distance parcourue $D_r(t)$, estimée par la vitesse mesurée $V_r(t)$, et d'autre part de la distance $D_{map}$ à vol d'oiseau, ou la distance curviligne sur le graphe routier dans la base cartographique.

Pour authentifier la position X(t) d'un élément mobile, l'indicateur de cohérence Ic(X) est calculé, par exemple, à partir de l'altitude mesurée $Z_r$, comparée à celle $z_{map}$ indiquée dans la base cartographique.

D'autres caractéristiques et avantages de la présente invention apparaîtront mieux à la lecture de la description d'un exemple donné à titre illustratif et nullement limitatif annexé des figures qui représentent :

- La figure 1, un exemple de système de localisation d'un dispositif mobile, tel qu'un véhicule, par satellite,
- La figure 2, un diagramme des différents éléments intervenant dans le procédé et le système selon l'invention,
- La figure 3, une illustration de l'appartenance d'une position d'un élément mobile dans l'aire de visibilité d'un pseudolithe,
- La figure 4, une illustration des contraintes de direction/vélocité donné par la cartographie,
- La figure 5, une illustration de comparaison vélocité et distance parcourue sur la carte.

En résumé, de manière générique, le procédé selon l'invention, pour authentifier la position GNSS d'un dispositif mobile sans avoir recours à une seconde source de position et en utilisant l'architecture des récepteurs actuellement utilisés, consiste notamment à évaluer la cohérence spatiale des informations de positionnement transférées à partir d'informations cartographiques.

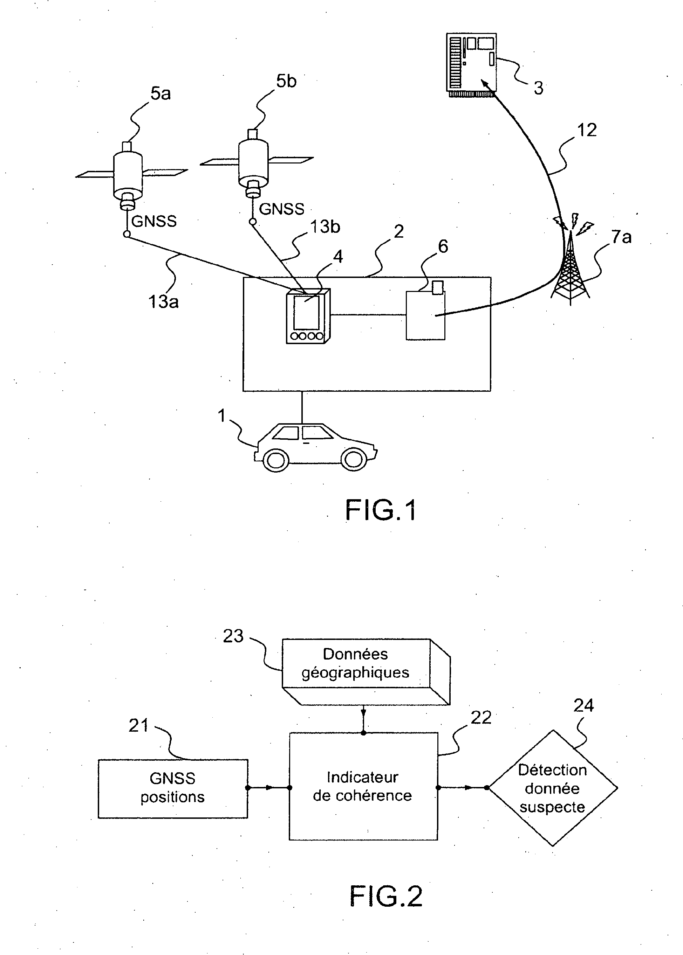

La figure 1 représente un exemple de localisation d'un élément mobile 1, par exemple un véhicule par satellite. Le système de localisation comporte, à bord du véhicule 1, un dispositif de localisation et de diffusion 2, dit " dispositif mobile", destiné à déterminer la position et/ou la vitesse d'un véhicule et à transmettre ces informations de localisation à un serveur de positions 3 chargé de les stocker et/ou de les exploiter. Le dispositif de localisation et de diffusion comporte un récepteur 4 de signaux de navigation GNSS (en anglais Global Navigation Satellite System) tels qu'un récepteur GPS (Global Positioning System), émis par une constellation de satellites 5a, 5b et un émetteur-récepteur 6 de communication mobile.

Les informations de position sont calculées par le récepteur GNSS 4 au moyen de l'exploitation de signaux 13a et 13b émis par les satellites 5a, 5b selon des méthodes connues par l'Homme du métier.

La figure 2 schématise de manière simplifiée l'architecture du système d'authentification de position d'un dispositif mobile selon l'invention.

La trajectoire du récepteur GNSS embarquée sur un dispositif mobile 1 est composée d'une suite de positions X(t) GNSS estimées à des instants t, 21, auxquelles sont associées une incertitude en position $\Delta X$ et une incertitude en temps $\Delta t$. Le dispositif mobile est dit "fidèle" et les positions "authentiques" si les positions sont calculées à partir de signal "authentique", c'est à dire émis par la constellation GNSS. Le dispositif mobile est dit "fraudeur" et les positions "inauthentiques" dans le cas contraire.

Un module 22 permet de déterminer des indicateurs de cohérence. Ce module 22 reçoit notamment les données géographiques 23, les valeurs de position GNSS.

Un module 24 a notamment pour fonction de détecter les données ou positions suspectes.

Différentes réalisations du procédé sont décrites, ci-après.

Selon une variante de réalisation, on utilise, par exemple, une base cartographique centralisée dans un ou plusieurs serveurs accessibles depuis chacun des récepteurs, qui reçoivent les données de positionnement. La zone de service d'un serveur et de la base de données est déterminée dans une implémentation par un compromis entre coût et performance. Dans une implémentation typique, une base couvrira un pays ou une région.

Une réalisation alternative d'implémentation du procédé selon l'invention est d'utiliser une base cartographique dupliquée sur chaque équipement mobile. Les modules 22 et 24 peuvent aussi être réalisés soit dans le terminal soit dans un serveur central.

Ces variations concernent l'implémentation et non le principe du procédé, expliqué dans l'implémentation centralisée.

Un composant de détection de données suspectes 24, tel que décrit dans son principe général par le brevet WO2012/130891, par exemple, estime un ou plusieurs indicateurs statistiques, 22, notés Ic(X), et X à la position d'un récepteur k à un instant donné.

Un indicateur étant bruité à la fois des erreurs de mesures récepteurs, des erreurs de la cartographie, et des erreurs inhérentes au principe de comparaison, un ou plusieurs filtres sont appliqués aux indicateurs statistiques Ic(X), par exemple en intégrant ces valeurs $Ic_{raw}$ (X) sur une trajectoire de l'élément mobile pour un intervalle de temps [$t_0$, $t_1$], dont la durée est choisie en fonction de l'application: $Ic_{filtré}(X) = \int_{t_0}^{t_1} Ic_{raw}(X)$ où $IC_{filtrée}$ correspond à la valeur de l'indicateur obtenue après filtrage et $Ic_{raw}$ correspond aux valeurs pouvant être prises par l'indicateur sur l'intervalle de temps [$t_0$, $t_1$].

A partir de cas valeurs filtrées, il est possible de construire une fonction de décision sur l'authenticité de position d'un dispositif mobile ou d'un récepteur k monté sur le dispositif.

A cet effet, il est possible d'utiliser typiquement une valeur logique vrai/faux, un estimateur de probabilité de fraude p(X) ou des valeurs de possibilité/nécessité suivant la logique floue de Lofti Zadeh (Zadeh, L.A. (1965). "Fuzzy sets", Information and Control 8 (3): 338-353, Novák, V. "Are fuzzy sets a reasonable tool for modeling vague phenomena?", Fuzzy Sets and Systems 156 (2005) 341-348), cette valeur étant une représentation numérique d'un degré de confiance dans la position $P_k$ du récepteur k:

un drapeau logique L(X) = Ic(X) > T, $\in$ {0;1}, où T est une valeur seuil choisie, ou
un estimateur de probabilité p(X) = f(Ic(X)) où f : [0; $\infty$[ $\rightarrow$ [0; 1] est une fonction croissante qui normalise l'indicateur sur [0;1]. Cette fonction est choisie à partir de modèle ou d'expérimentation pour être un estimateur valable de la probabilité de fraude, ajusté à l'aide de paramètres.

Par exemple : p(X) = 2/$\pi$*arctan($\beta$ Ic$^m$) $\in$ [0;1] est continue et satisfait ces bornes.

Les valeurs de paramétrage sont, par exemple, la valeur seuil T > 0, ou les facteurs $\beta$ > 0 et m > 0. Ces valeurs permettent le réglage de la décision suivant la distribution observée de l'indicateur utilisé sur des échantillons représentatifs de trajectoires réelles et de trajectoires falsifiées pour un dispositif mobile donné. $\beta$ est défini comme l'inverse de la valeur Ic correspondant à une probabilité de confiance de ½ et m permet de régler la « rampe » de la fonction.

p(X) étant la probabilité de leurrage ou en anglo-saxon « spoofing », le complémentaire 1-p(X) à cette valeur est une probabilité d'authenticité. Cette probabilité p(X) indicateur de confiance Ic(n, X) est obtenue à partir d'un des indicateurs de cohérence ou indicateurs statistiques 22 ou une combinaison de certains de ces indicateurs en appliquant les méthodes connues de l'Homme du métier, celles décrites dans le brevet WO2012/130891, ainsi qu'au moins un des 4 types d'indicateur originaux, passage près d'un pseudolithe, direction/vélocité comparé au segment routier, direction/vélocité comparé à la trajectoire, position comparé au modèle de terrain, décrits ci-après, exploitant la collaboration entre récepteurs.

A) Pseudolithes

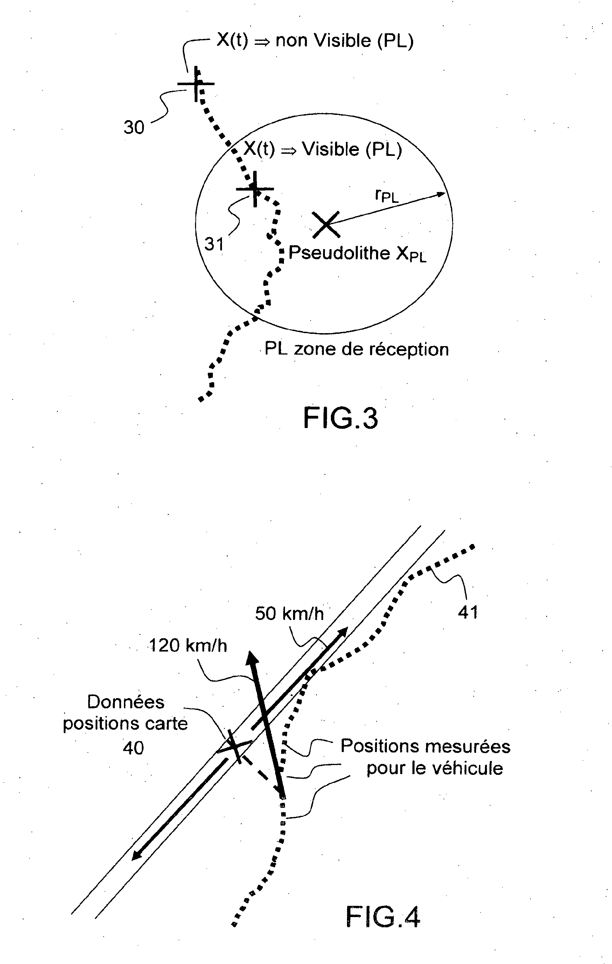

Dans cette méthode schématisée à la figure 3, le système comprend un certain nombre d'émetteurs terrestres, dit "pseudolithes", émettant un signal compatible d'une constellation GNSS, que les récepteurs GNSS existant utilisent pour calculer leur position, suivant des méthodes connues de l'homme du métier: la position du pseudolithe étant diffusée dans le message de navigation, ou par assistance, ou connu par un serveur centralisé qui calcule la position utilisateur en "mobile-assisted". Par ailleurs, ce pseudolithe est distingué dans le calcul du point par son PRN, et ce fait permet au détecteur de reconnaître la réception ou non d'un pseudolithe, noté par la variable logique: visible(PL).

L'idée est d'installer de tels pseudolithes en certain points de contrôle (ce qui est potentiellement moins couteux, plus discrets, moins contraignant que d'autres équipements de contrôle). Dans un système de paiement sensible à la position, l'implantation d'un pseudolithe dans une « porte virtuelle », valide l'évènement de tarification associé à cette porte. L'authentification de la position consiste à comparer celle-ci à la zone de couverture du pseudolithe. PL étant la zone de réception, si $r_{PL}$ est le rayon estimée de réception pour un récepteur et l'environnement donné, la position $X(t)$ de l'élément mobile est dans la couverture du pseudolithe si et seulement si: $| X(t) - X_{PL} | \leq r_{PL}$, comme illustré en figure 3. Le point 30 correspond à un élément non visible et le point 31 à un élément visible.

Si la position $X(t)$ de l'élément mobile est dans cette zone de couverture PL sans que le pseudolithe soit inclus dans le calcul du point, ou que la position $X(t)$ n'est pas dans la zone PL alors que le pseudolithe est inclus dans le calcul du point, alors le signal utilisé pour calculer la position n'est vraisemblablement pas authentique.

Il est possible de définir un indicateur de cohérence:

$$Ic_{PL} (X) = \text{si visible(PL) alors } | X(t) - X_{PL} |/ r_{PL} \text{ sinon } r_{PL} / | X(t) - X_{PL} |$$

B) Cohérence de direction et vitesse schématisée à la figure 4

Dans cette variante de mise en oeuvre, mise en oeuvre dans des applications automobiles, la position indiquée par le récepteur GNSS est associée à une position vraisemblable $X_m(t)$ sur le réseau routier en correspondance de carte ou « map-matching ». Sur ce schéma, la ligne en pointillée 41 représente les différentes positions $X(t)$ mesurées pour le véhicule en mouvement et la référence 40 la position correspondante sur la carte routière.

$\theta$ étant l'angle calculé dans le repère nord-sud habituellement utilisé dans le domaine de la cartographie routière, $\theta_r$ l'angle du véhicule calculé au niveau du récepteur dans le repère terrestre, $V_{map}$ la vitesse définie par la cartographie, en fonction du segment de route concerné, de la vitesse limite de conduite sur ce segment, $V_r$ est la vitesse mesurée par le récepteur GNSS du véhicule mobile à surveiller. La ou les directions $\theta_{map1}$, $\theta_{map2}$ du segment routier (suivant qu'il soit classé en sens unique ou double sens) est comparée à celle du véhicule $\theta_r$, de même la vitesse théorique $V_{map}$ est comparée à la vitesse mesurée $V_r$ du véhicule. Un indicateur logique $L(X)$ est levé lorsque la différence est supérieur à un seuil respectif $\Delta\theta$, $\Delta V$ pour au moins l'une de ces variables:

$$L(X) = |\theta_r - \theta_{map1}| > \Delta\theta \text{ and } |\theta_r - \theta_{map2} |> \Delta\theta \text{ ou } V_r > V_{map} + \Delta V$$

La valeur seuil $\Delta\theta$ est par exemple obtenue par des moyens d'évaluation préalablement définis.

Cette vitesse théorique $V_{map}$ est donnée soit par la limitation de vitesse, soit par l'évaluation de la vitesse à partir du classement de la voirie et de la topographie (virages, cotes, ...). Une vitesse inférieure n'est pas réputée suspicieuse. Evidemment, cette indication est ambiguë puisqu'une vitesse réelle excessive lève une fausse alarme.

Un indicateur continu $Ic_{Dir}(X)$ est calculé comme suit à un instant t donné :

$$Ic_{Dir}(X) = \left|\theta_r(t) - \theta_{map}(t)\right| / \Delta\theta + \max(V_r(t) - V_{map}(t), 0) / \Delta V$$

Par ailleurs la comparaison entre la position reportée $X(t)$ et celle cartographiée $X_m(t)$ sur le réseau routier, est un autre indicateur, décrit dans la demande de brevet WO2012/130891.

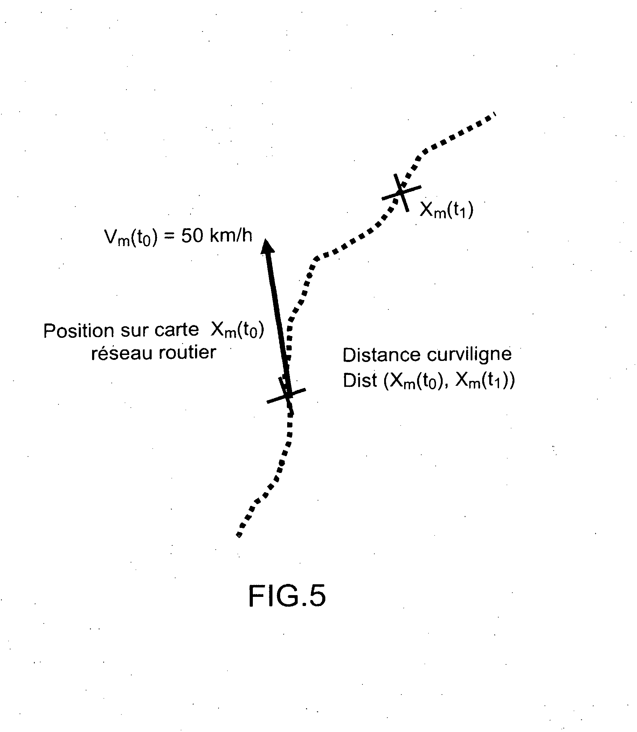

C) Vitesse comparée à la trajectoire schématisée à la figure 5

Dans cette variante de mise en oeuvre, l'indicateur compare directement la distance Dist, correspondant à la

vitesse mesurée $V_r$ fois l'intervalle temporel entre 2 mesures, avec celle calculée d'après la trajectoire constituée de la suite des positions $X(t_k)$, en effectuant un calcul de différence de points successifs, ou encore en calculant la longueur sur le graphe routier qui rejoint ces points successifs, ce qui peut-être fort différent si l'intervalle de temps n'est pas petit, ou la trajectoire sinueuse (voie d'accès, chicanes, ...).

Cet indicateur établit une cohérence entre des observables du signal de chaque satellite (à savoir pseudo range et fréquence) qui sont dépendant de la trajectoire du mobile. L'utilisation de la cartographie permet en principe une mesure assez exacte du chemin parcouru entre deux points, qui devrait correspondre à la vitesse définie en GNSS.

En incluant le calcul de longueur sur le graphe routier, on détecte en plus un leurrage approprié en phase de code et fréquence, mais qui n'aurait pas utilisé ce même graphe pour piloter le lien entre les 2.

Un indicateur $Ic_{Dist}(X)$ peut-être calculé à partir de l'écart entre la distance $D_r(t_k)$ correspondant à la vitesse mesurée au niveau du récepteur

GNSS multipliée par la différence temporelle entre deux instants $t_{k+1}$-$t_k$ et la distance $D_{map}(t_k)$ est la distance mesurée entre deux points mesurés $X(t_k)$, $X(t_k)$, ou deux points projetés $X_m(t_k)$,$X_m(t_{k+1})$ sur le graphe routier ou cartographie routière :

$$Ic_{Dist}(X) = \left| D_r(t_k) - D_{map}(t_k) \right|$$

où

$$D_r(t_k) = S_r(t_k) \times (t_{k+1} - t_k)$$

et

$$D_{map}(t_k) = dist(X(t_k), X(t_{k+1})),$$

ou

$$D_{map}(t_k) = dist(X_m(t_k), X_m(t_{k+1})),$$

dist étant la distance à vol d'oiseau ou la distance curviligne sur le graphe routier.

D) Altitude comparée au modèle de terrain

Pour tout personne ou véhicule terrestre de position $X = (x_r, y_r, z_r)$, projetée sur une carte de terrain en un point $(x_{map}, y_{map}, z_{map})$, l'altitude $z_r$ est supposée être conforme à celle $z_{map}$ du terrain, pour la latitude et longitude $x_r$, $y_r$. L'indicateur peut-être calculé à partir de cet écart sur une trajectoire :

$$Ic_{Alt}(X) = \left| z_r(t) - z_{map}(t) \right|$$

$z_{map}$ est l'altitude de la projection de la position sur une carte de terrain, laquelle peut ou non prendre en compte le "map-matching".

**Revendications**

1. Procédé pour authentifier la position $X(t)$ d'un élément mobile (1), un élément mobile comprenant au moins un récepteur GNSS, ayant une fonction d'estimer la position $X(t)$ de cet élément mobile (1), ce procédé comportant en combinaison au moins les étapes suivantes :

   • déterminer une ou plusieurs données (21) associées à la position $X(t)$ d'un récepteur GNSS,
   • extraire d'une base de données cartographique (23) des données de référence associées à la position $X(t)$,
   • déterminer au moins un indicateur de cohérence (22) Ic(X) de la position de l'élément mobile (1) qui établit une cohérence entre des observables GNSS, en utilisant la première donnée associée à la position X(t) dudit récepteur et la donnée de référence issue de la base cartographique et associée à la position X(t),
• filtrer le ou lesdits indicateurs Ic(X),en intégrant ces valeurs sur une trajectoire de l'élément mobile pour un intervalle de temps donné, $[t_0, t_1]$,
• authentifier (24) la position X(t) dudit élément mobile (1) en utilisant un ou plusieurs desdits indicateurs de cohérence Ic(X) et en comparant la valeur filtrée des indicateurs à une valeur donnée.

2. Procédé selon la revendication 1 **caractérisé en ce que** l'établissement de la base cartographique (23) et le calcul d'indicateur de cohérence sont réalisées dans un dispositif centralisé lié par un réseau de communication auxdits éléments mobiles (1).

3. Procédé selon la revendication 1 **caractérisé en ce que** l'établissement de la base cartographique (23) et le calcul d'indicateur de cohérence sont réalisées au sein desdits éléments mobiles (1).

4. Procédé selon l'une des revendications 1 à 3 **caractérisé en ce que** pour authentifier la position X(t) d'un élément mobile (1), l'indicateur de cohérence Ic(X) est calculé à partir de la position de pseudolithes indiquée dans la base cartographique.

5. Procédé selon l'une des revendications 1 à 3 **caractérisé en ce que** pour authentifier la position X(t) d'un élément mobile (1), l'indicateur de cohérence Ic(X) est calculé à partir de la ou les directions $\theta_{map1}$, $\theta_{map2}$ du segment routier parcouru et/ou la vitesse $V_{map}$ estimée sur ce segment, à partir de données indiquées dans la base cartographique.

6. Procédé selon l'une des revendications 1 à 3 **caractérisé en ce que** pour authentifier la position X(t) d'un élément mobile (1), l'indicateur de cohérence Ic(X) est calculé à partir d'une part de la distance parcourue $D_r(t)$, estimée par la vitesse mesurée $V_r(t)$, et d'autre part de la distance $D_{map}$ à vol d'oiseau, ou la distance curviligne sur le graphe routier dans la base cartographique.

7. Procédé selon l'une des revendications 1 à 3 **caractérisé en ce que** pour authentifier la position X(t) d'un élément mobile (1), l'indicateur de cohérence Ic(X) est calculé à partir de l'altitude mesurée $z_r$, comparée à celle $z_{map}$ indiquée dans la base cartographique (23).

## Patentansprüche

1. Verfahren zum Authentifizieren der Position X(t) eines mobilen Elements (1), wobei ein mobiles Element wenigstens einen GNSS-Empfänger mit einer Funktion zum Schätzen der Position X(t) dieses mobilen Elements (1) umfasst, wobei dieses Verfahren in Kombination wenigstens die folgenden Schritte beinhaltet:

- Ermitteln von einem oder mehreren mit der Position X(t) eines GNSS-Empfängers assoziierten Datenelementen (21),
- Extrahieren einer Kartendatenbank (23) von mit der Position X(t) assoziierten Referenzdaten,
- Ermitteln wenigstens eines Kohärenzindikators (22) Ic(X) der Position des mobilen Elements (1), der eine Kohärenz zwischen den beobachtbaren GNSS herstellt, unter Verwendung des ersten mit der Position X(t) assoziierten Datenelements des Empfängers und der mit der Position X(t) assoziierten, von der Kartendatenbank ausgegebenen Referenzdaten,
- Filtern des oder der Indikatoren Ic(X) durch Integrierern dieser Werte auf einer Bahn des mobilen Elements für ein gegebenes Zeitintervall $[t_0, t_1]$,
- Authentifizieren (24) der Position X(t) des mobilen Elements (1) unter Verwendung von einem oder mehreren der Kohärenzindikatoren Ic(X) und durch Vergleichen des filtrierten Wertes der Indikatoren mit einem gegebenen Wert.

2. Verfahren nach Anspruch 1, **dadurch gekennzeichnet, dass** die Erstellung der Kartendatenbank (23) und das Berechnen des Kohärenzindikators in einer zentralisierten Vorrichtung erfolgen, die durch ein Kommunikationsnetz mit den mobilen Elementen (1) verbunden ist.

3. Verfahren nach Anspruch 1, **dadurch gekennzeichnet, dass** die Erstellung der Kartendatenbank (23) und die Berechnung des Kohärenzindikators im Innern der mobilen Elemente (1) realisiert sind.

4. Verfahren nach einem der Ansprüche 1 bis 3, **dadurch gekennzeichnet, dass** zum Authentifizieren der Position X(t) eines mobilen Elements (1) der Kohärenzindikator Ic(X) auf der Basis der in der Kartendatenbank angezeigten Position von Pseudoliten berechnet wird.

5. Verfahren nach einem der Ansprüche 1 bis 3, **dadurch gekennzeichnet, dass** zum Authentifizieren der Position X(t) eines mobilen Elements (1) der Kohärenzindikator Ic(X) auf der Basis der Richtung(en) $\theta_{map1}$, $\theta_{map2}$ des durchlaufenen Streckensegments und/oder der auf diesem Segment geschätzten Geschwindigkeit $V_{map}$, anhand von in der Kartendatenbank angezeigten Daten berechnet wird.

6. Verfahren nach einem der Ansprüche 1 bis 3, **dadurch gekennzeichnet, dass** zum Authentifizieren der Position X(t) eines mobilen Elements (1) der Kohärenzindikator Ic(X) auf der Basis einerseits der durchlaufenen Distanz $D_r(t)$, geschätzt anhand der gemessenen Geschwindigkeit $V_r(t)$, und andererseits der Luftlinienentfernung $D_{map}$ oder der gekrümmten Distanz auf der Streckenkurve in der Kartendatenbank berechnet wird.

7. Verfahren nach einem der Ansprüche 1 bis 3, **dadurch gekennzeichnet, dass** zum Authentifizieren der Position X(t) eines mobilen Elements (1) der Kohärenzindikator Ic(X) auf der Basis der gemessenen Höhe $z_r$ berechnet wird, die mit der in der Kartendatenbank (23) angezeigten $z_{map}$ verglichen wird.

**Claims**

1. Method for authenticating the position X(t) of a mobile element (1), a mobile element comprising at least a GNSS receiver, having a function of estimating the position X(t) of that mobile element (1), this method comprising, in combination, at least the following steps:

   • determining one or more items of data (21) associated with the position X(t) of a GNSS receiver,
   • extracting reference data associated with the position X(t) from a cartographic database (23),
   • determining at least one consistency indicator (22) Ic(X) of the position of the mobile element (1), which establishes a consistency between observable GNSS, using the first item of data associated with the position X(t) of the said receiver and the reference data coming from the cartographic database and associated with the position X(t),
   • filtering the said indicator or indicators Ic(X), integrating these values over a path of the mobile element for a given period of time $[t_0, t_1]$,
   • authenticating (24) the position X(t) of the said mobile element (1) using one or more said consistency indicators Ic(X) and comparing the filtered value of the indicators to a given value.

2. Method according to Claim 1, **characterized in that** the establishment of the cartographic database (23) and the calculation of the consistency indicator are carried out in a centralized device connected by a communications network to the said mobile elements (1).

3. Method according to Claim 1, **characterized in that** the establishment of the cartographic database (23) and the calculation of the consistency indicator are carried out within the said mobile elements (1).

4. Method according to one of Claims 1 to 3, **characterized in that** in order to authenticate the position X(t) of a mobile element (1), the consistency indicator Ic(X) is calculated from the position of pseudolites indicated in the cartographic database.

5. Method according to one of Claims 1 to 3, **characterized in that** in order to authenticate the position X(t) of a mobile element (1), the consistency indicator Ic(X) is calculated from the direction or directions $\theta_{map1}$, $\theta_{map2}$ of the road segment travelled and/or the speed $V_{map}$ estimated over this segment, from data indicated in the cartographic database.

6. Method according to one of Claims 1 to 3, **characterized in that** in order to authenticate the position X(t) of a mobile element(1), the consistency indicator Ic(X) is calculated from, on the one hand, the distance travelled $D_r(t)$, estimated by the measured speed $V_r(t)$, and on the other hand the distance as the crow flies $D_{map}$, or the curvilinear distance on the road graph in the cartographic database.

7. Method according to one of Claims 1 to 3, **characterized in that** in order to authenticate the position X(t) of a mobile element (1), the consistency indicator Ic(X) is calculated from the measured altitude $z_r$, compared with that $z_{map}$ indicated in the cartographic database (23).

FIG.1

FIG.2

X(t) ⇒ non Visible (PL)

30

X(t) ⇒ Visible (PL)

$r_{PL}$

31

✕

Pseudolithe $X_{PL}$

PL zone de réception

**FIG.3**

50 km/h

41

120 km/h

Données
positions carte
40

Positions mesurées
pour le véhicule

**FIG.4**

$V_m(t_0) = 50$ km/h

Position sur carte $X_m(t_0)$
réseau routier

Distance curviligne
Dist $(X_m(t_0), X_m(t_1))$

$X_m(t_1)$

FIG.5

## RÉFÉRENCES CITÉES DANS LA DESCRIPTION

**Documents brevets cités dans la description**

- EP 2203022 A
- WO 2009090515 A
- WO 2012130891 A
- WO 2009037133 A

**Littérature non-brevet citée dans la description**

- **ZADEH, L.A.** Fuzzy sets. *Information and Control,* 1965, vol. 8 (3), 338-353
- **NOVÁK, V.** Are fuzzy sets a reasonable tool for modeling vague phenomena?. *Fuzzy Sets and Systems,* 2005, vol. 156, 341-348